# EUROPEAN PATENT APPLICATION

(11) **EP 4 387 106 A1**
(43) Date of publication of application: **19.06.2024**
(21) Application number: 23216851.8
(22) Date of filing: 14.12.2023
(51) Int. Cl.: H04B 1/02, H04B 7/22

(54) **SYSTEMS AND METHODS FOR ADAPTIVE BEYOND LINE OF SIGHT (BLOS) COMMUNICATIONS VIA EVAPORATION DUCT**

(30) Priority: 16.12.2022 US 202218082962
(71) Applicant: Rockwell Collins, Inc., Cedar Rapids, IA 52498 (US)
(72) Inventor: HARALSON, Zachary, Iowa City (US); LOVSETH, Jonathan A., Marion (US)
(74) Representative: Dehns

(57) **Abstract**

A communications node for transmitting and receiving beyond line of sight (BLOS) communications through an evaporation duct (ED) environment proximate to a body of water (e.g., coastal, littoral) models environmental conditions (e.g., duct heights) based on current climate data for the ED environment. Based on the modelled ED conditions, the node generates signal propagation models for each of a set of possible transmitting frequencies (e.g., likely signal loss, transmission range). Based on the most current ED signal propagation model, the node selects the optimal transmission frequency for BLOS communications through the evaporation duct.

## Description

### BACKGROUND

Effective warfighting concepts depend on the 14 December 2023 to coordinate and communicate among forces distributed over great distances and across coastal, littoral, maritime, and/or marine environments. In particular, effective operations such as Littoral Operations in a Contested Environment (LOCE), Distributed Maritime Operations (DMO), and Expeditionary Advanced Base Operations (EABO) may be simplified and enhanced by the ability to connect forces in these environments beyond line of sight (BLOS), i.e., over the horizon, via simple non-satellite-based communications.

For example, effective operations may require beyond the horizon transmission of large amounts of data of a wide variety of data types, e.g., sensor data, images/video, messages and communications (e.g., in text, audio, or video formats). Conventional approaches exist for such transmissions: satellite-based communications (SATCOM); high frequency (HF) data radio (HFDR); relay-based communications, and troposcatter propagation. However, each of these is associated with significant drawbacks in a contested environment.

### SUMMARY

In a first aspect, a transmitting (Tx) communications node of a multi-node communications network is disclosed. In embodiments, the Tx node includes antenna elements and a communications interface for transmitting and receiving beyond line of sight (BLOS) communications. For example, the Tx node may transmit messages to a receiving (Rx) node beyond visual line of sight (e.g., over the horizon) through an evaporation duct (ED) environment generally associated with a coastal (e.g., ship-to-shore) or sea environment (the Tx node may likewise receive messages from the Rx node via the ED environment). Based on current climate data with respect to the ED environment, the Tx node models evaporation duct conditions throughout the area. Based on the modelled environmental conditions, the Tx node generates a signal propagation model for each of a set of possible transmitting frequencies, the propagation model predicting likely signal loss, transmission range, etc. through the ED environment for a particular frequency. Based on the signal propagation mode, the Tx node selects an optimal frequency for transmission of BLOS communications.

In some embodiments, the communications interface sets the antenna elements of the Tx node to transmit at the selected optimal transmission frequency.

In some embodiments, ED conditions mapped by the environmental model include duct heights (e.g., likely heights of the ED layer above the water surface), duct shapes (e.g., of the ED regions), and/or humidity levels throughout the ED environment.

In some embodiments, climate data may include real-time weather data or, if real-time data is not available, predictive or forecast weather data or historical atmospheric or weather data relevant to the ED environment.

In some embodiments, climate data include wave heights and/or tide information (e.g., low and high tide times and/or levels).

In some embodiments, the Tx node selects an optimal transmitting frequency based on a maximum achievable transmission range.

In some embodiments, the Tx node selects an optimal transmitting frequency based on minimizing probability of detecting the transmitted signal (e.g., by hostile elements within the ED environment).

In some embodiments, the Tx node transmits channel sounding signals through the ED environment to the Rx node at available transmitting frequencies and receives signal reception data (e.g., received signal strength) from the Rx node. Based on the received signal reception data, the Tx node selects the optimal transmitting frequency.

In some embodiments, the Tx node selects a new optimal transmitting frequency in response to a triggering event (e.g., by generating a new environmental model and/or new signal propagation model). For example, the Tx node may receive new climate data indicative of atmospheric/weather changes that affect the ED environment. Alternatively, modelled conditions within the ED environment may detectably change (or are likely to change based on a time of day or an elapsed time since the last selection). Alternatively, signal quality at the current transmitting frequency may meet or drop below a threshold level. Alternatively, changing mission priorities or objectives may dictate a new frequency selection process.

In some embodiments, the Tx node may additionally select an optimal bandwidth for transmission.

In some embodiments, the Tx node (or the Rx node) is aboard a mobile platform, e.g., a water-based or airborne vehicle or (e.g., for shore-to-ship BLOS communications) a ground-based vehicle or mobile manpack.

In some embodiments, the mobile platform is an unmanned aerial vehicle (UAV).

In some embodiments, the Tx node is embodied aboard a floating platform.

In some embodiments, the Tx node selects an optimal transmission height (e.g., an optimal height of the antenna elements relative to the water surface) based on the ED signal propagation model.

In some embodiments, the Tx node is directed (e.g., by the communications interface configured for determining the optimal transmitting frequency and/or height) to adjust the antenna elements to the optimal height by adjusting the height of the antenna elements relative to the platform.

In some embodiments, the antenna elements are embodied in an electronic antenna array wherein each antenna element corresponds to a particular height relative to the water surface (e.g., or relative to the platform), and the Tx node is directed to transmit at the selected optimal transmission height via activation of the antenna element/s corresponding to the selected height.

In some embodiments, the Tx node is embodied aboard a mobile platform, e.g., an aircraft operating at an altitude above the water surface, and the Tx node is directed to transmit at the selected optimal transmission height by adjusting the altitude of the mobile platform.

In a further aspect, a method for adaptive BLOS communications through an ED environment is also disclosed. In embodiments, the method includes receiving, via a communications interface of a transmitting (Tx) node of a multi-node communications network, location and timing data for a beyond line of sight (BLOS) transmission to a receiving (Rx) node of the network through an evaporation duct (ED) environment associated with a body of water. For example, location data may include the locations of the Tx and Rx nodes and of the ED environment therebetween, as well as a likely transmission time. The method includes receiving weather and/or atmospheric data relevant to the ED environment. The method includes, based on the received weather data, modeling environmental conditions within the ED environment at the likely time of transmission. The method includes, based on the environmental modeling, modeling RF signal propagation through the ED environment using each of a set of available transmitting frequencies. The method includes, based on the signal propagation model, selecting an optimal transmitting frequency for the BLOS transmission to the Rx node through the ED environment.

In some embodiments, the method includes transmitting channel sounding signals to the Rx node at frequencies selected from the set of available transmitting frequencies. The method includes receiving signal reception data (e.g., signal strength indicators) from the Rx node. The method includes selecting the optimal transmitting frequency based at least in part on the received signal strength indicators.

In some embodiments, the method includes selecting, based on the signal propagation model, an optimal height of the antenna elements of the Tx node (e.g., relative to the water surface) for BLOS transmission through the ED environment.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 is a diagrammatic illustration of two surface ships with various means of beyond line of sight (BLOS) communication through a contested evaporation duct (ED) environment according to example embodiments of this disclosure;
FIG. 2A is a block diagram illustrating a transmitting (Tx) network node configured for various means of BLOS communication according to example embodiments of this disclosure;
FIG. 2B is a block diagram illustrating an adaptive frequency selection mode of the Tx node of FIG. 2A;
FIG. 2C illustrates environmental models of the contested ED environment of FIG. 1;
FIG. 2D illustrates ED signal propagation models of the contested ED environment of FIG. 1 according to example embodiments of this disclosure;
FIG. 3 is a diagrammatic map of a contested ED environment according to example embodiments of this disclosure;
FIG. 4 is a diagrammatic illustration of surface ships and aircraft with various means of BLOS communication through the contested ED environment of FIG. 1;
FIGS. 5 and 6 are diagrammatic illustration of the Tx node of FIG. 2A configured for adaptive-height BLOS communications within a contested ED environment according to example embodiments of this disclosure; and
FIGS 7A through 7C are flow diagrams illustrating a method for dynamic adjustment of radio system parameters to improve evaporative duct communication according to example embodiments of this disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Broadly speaking, embodiments of the inventive concepts disclosed herein are directed to systems and methods for adaptive communications through the evaporation duct (ED) among assets deployed across littoral and maritime environments. ED-based communications (EDCOM) are not widely used in conventional force deployments due to the dynamic ability of the ED to assist in BLOS/over-the-horizon communications. For example, while transmitters and receivers may be deployed in oceanic environments, this equipment is generally at a fixed height above the water surface and transmits at a fixed frequency. Conditions in an ED environment, however, are subject to continual flux dependent on a variety of factors, some (e.g., time of day, time of year) more predictable than others (e.g., weather and atmospheric conditions within the contested environment). Accordingly, embodiments of the inventive concepts disclosed herein provide for a dynamic system able to adjust in multiple dimensions to maintain reliable BLOS communication links in contested environments where conventional communications means may be unavailable or associated with a high probability of detection.

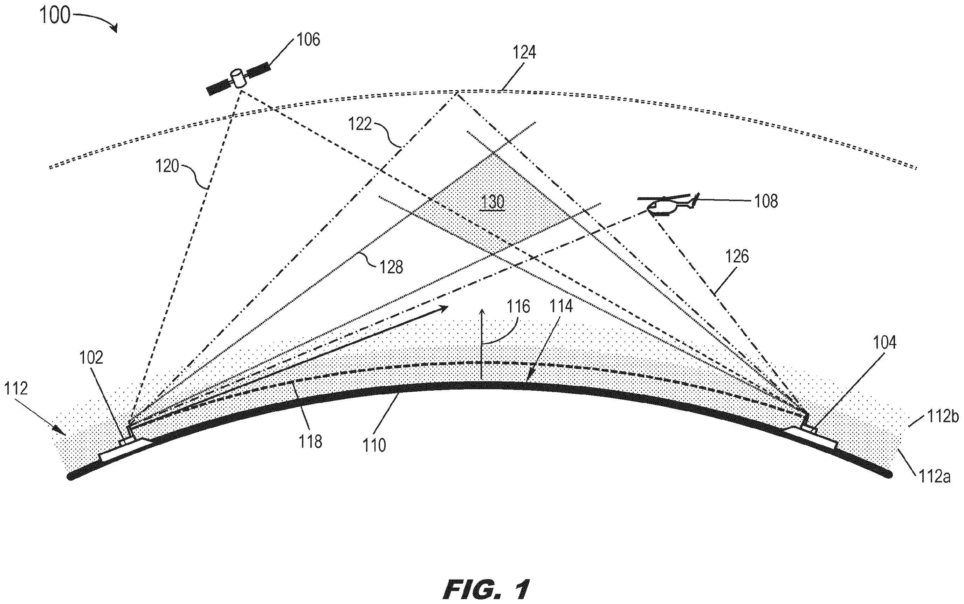

Referring to FIG. 1, a contested evaporation duct (ED) environment 100 is disclosed. The ED environment 100 may include transmitting (Tx) asset 102 (e.g., node), receiving (Rx) asset 104, satellite 106, and communications relay platform 108.

In embodiments, the ED environment 100 may be distinct from overland contested environments in that the ED environment 100 may be a coastal, littoral, or maritime environment proximate to a body of water 110. For example, the body of water 110 may be an ocean or other coastal body of water (e.g., bay, sea, gulf, sound, lake, bight, etc.) over which an evaporation duct 112 (ED) forms. The ED 112 may be present over most coastal environments, particularly in tropical regions. Constant evaporation at the surface 114 of the body of water 110 may provide for a layer (112a) or region of very high humidity close to the surface. Above the surface 114, humidity may decrease rapidly (116) with height above the surface.

In embodiments, the unique humidity profile of the ED 112, particularly the high humidity layer 112a, may "trap" RF signals of particular frequencies. For example, an RF signal 118 of the right frequency transmitted by the Tx asset 102 may, under ideal conditions, be deflected downward as it travels through the ED 112, following the curvature of the earth (e.g., the surface 114) until it is received by the distant Rx asset 104 over the horizon (e.g., beyond visual line of sight of the Tx asset 102, obstructed from view by the horizon).

Within the contested ED environment 100, other means of communication may be available, but as noted above each may be associated with particular disadvantages. For example, satellite-based communications 120 ("SATCOM"; e.g., via satellite 106) are dependent on satellite availability (a limited, and vulnerable, resource), provide for data rates that may be limited by the number of simultaneous users, and may easily be detected, intercepted, or jammed. Similarly, high frequency (HF) data radio 122 (HFDR) provides for long-distance data transmission via signal reflection by the earth's ionosphere 124. However, HFDR 122 requires specialized equipment associated with a high SWaP-C (size, weight, power, cost) factor; HFDR is likewise limited in data rate and vulnerable to detection. Further, relay-based communications 126 require additional ground-based or airborne assets (e.g., relay platform 108, which may be a ground-based platform of fixed location or a ground-based or airborne vehicle) to serve as relays; further, to serve as effective relays these assets may need to be deployed in positions that would leave them vulnerable to attack (and communication lines vulnerable to disruption). Troposcatter (e.g., tropospheric scatter) signal propagation 128 (e.g., scattering of RF signals through the earth's upper troposphere 130) provides for higher data rates than HFDR 122 but likewise requires high-SWaP-C equipment and is similarly prone to detection.

In embodiments, the Tx and Rx assets 102, 104 may be platforms of fixed location (e.g., ground-based platforms or water-based platforms floating on the surface 114) or mobile platforms (e.g., ground-based vehicles, oceangoing ships, or manned/unmanned aircraft). For example, the Tx and Rx assets 102, 104 may be components of a larger network of assets distributed throughout the contested ED environment 100. Each asset, including the Tx and Rx assets 102, 104, may incorporate transmission and reception (TxRx) and antenna equipment configured for high-powered wideband communications via the ED 112 (which communications may be omnidirectional or, in some embodiments, directional). Further, as noted above conditions within the ED 112 may be subject to change according to a variety of factors. For example, humidity levels above the surface 114 may change according to the time of year or time of day. Additionally, humidity levels may change according to weather and atmospheric patterns throughout the ED environment. For example, changing atmospheric conditions may affect the height of the high humidity layer 112a of the ED 112 at particular times of year or times of day. As the height of the high humidity layer 112a changes (along with other properties of the ED 112), the ability of the ED to propagate signals over the horizon and through the ED may likewise change, e.g., favorably for RF signals at some frequencies and within some frequency ranges and adversely for other RF signals of particular frequency or range.

In embodiments, the Tx and Rx assets 102, 104 (and other networked assets deployed throughout the contested ED environment 100) may be configured for adaptive ED communications. For example, the Tx asset 102 transmitting to the Rx asset 104 may assess current conditions within the ED 112 through which the transmitted RF signal 118 will travel based on any available information, profiling the ED at the time of transmission. In embodiments, based on the ED profile, the Tx asset 102 may adjust one or more aspects of the transmitted RF signal 118 to provide for optimal signal propagation through the ED 112 to the Rx asset 104. For example, based on the determined ED profile, the Tx asset 102 may select an optimal frequency for transmission of the RF signal 118 (e.g., according to the mission priorities of the Tx asset 102). Additionally, or alternatively, the Tx asset 102 may select an optimal antenna height for transmission of the RF signal, adjusting a height of its antenna elements above the surface 114 to optimize transmission of the RF signal 118.

By providing reliable communications links among the Tx asset 102, the Rx asset 104, and other networked assets deployed throughout the contested ED environment 100, networked assets may remain in contact with each other even when separated beyond visual range, providing an expanded area of control while reducing vulnerability to enemy reconnaissance operations, as directional communications may allow lower probability of detection/intercept (LPD/LPI). Further, BLOS data links may be provided to networked assets in areas where other forms of communications are degraded or denied.

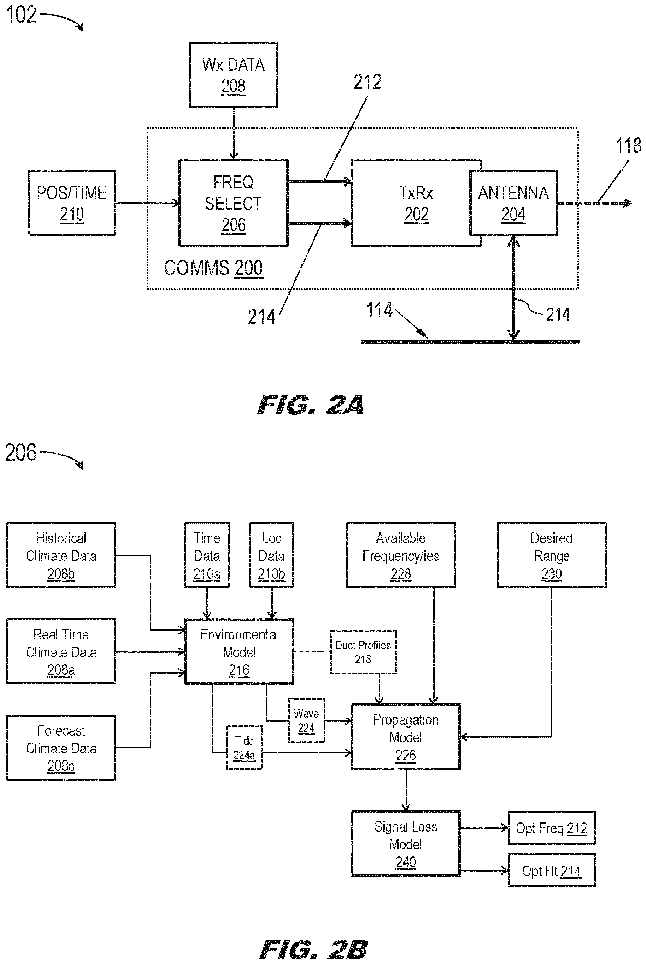

Referring now to FIG. 2A, the Tx node 102 is shown.

In embodiments, the Tx node 102 may include a wideband communications system 200. For example, the communications (comms) system 200 may include transmission and reception (Tx/Rx) circuitry and/or processors 202 providing for transmission and reception of RF signals 118 through the ED environment (100, FIG. 1) via antenna elements 204.

In embodiments, the Tx/Rx processors 202 may additionally be configurable (e.g., via executable encoded instructions storable to memory within the comms system 200) for software-based adaptive frequency selection 206. For example, adaptive frequency selection 206 allows the comms system 200 to assess changing conditions within the ED 112, and accordingly adapt the transmission of the RF signal 118 to optimize signal propagation through the ED to the Rx asset 104. In embodiments, adaptive frequency selection 206 may be selectively repeated as necessary. For example, adaptive frequency selection 206 may be performed at regular fixed intervals (e.g., every X minutes, every Y hours) so as not to strain computing resources. In some embodiments, adaptive frequency selection 206 may be performed in response to a triggering event indicative of a significant change of conditions within the ED environment 100 or within the ED 112 in particular. For example, as signal propagation properties of the ED 112 may change based on a variety of contributing factors, some more predictable than others, a triggering event may be defined in alignment with mission priorities (or changes in mission priorities or objectives).

In embodiments, adaptive frequency selection 206 involves selecting an optimal frequency (e.g., of a set or range of available or possible transmission frequencies) based on mission priorities and any available information defining present conditions within the ED. For example, based on the best available model of current ED conditions, signal loss associated with a particular frequency and range may be predicted, and an optimal transmission frequency selected based on available frequencies and the desired range.

In embodiments, adaptive frequency selection 206 may receive as an input weather (Wx) data 208 (e.g., climatic data) for the ED environment 100. For example, Wx data 208 may include temperature and/or humidity measurements for the vicinities of the Tx asset 102 and/or the Rx asset 104. Current temperature and humidity measurements at both the Tx and Rx assets 102, 104 may be preferred in order to tailor frequency selection to real time conditions. In embodiments, if real time temperature and humidity information is unavailable, adaptive frequency selection 206 may alternatively receive as an input timing and location data 210 for the vicinities of the Tx asset 102 and/or Rx asset 104. For example, based on timing and location data 210, e.g., geographic locations of the Tx asset 102 and/or Rx asset 104 and the current time of year/time of day, adaptive frequency selection 206 may be performed based on historical or predictive weather models (e.g., based on the likelihood of particular conditions within the ED 112 at a given location and a given time of year/day).

In embodiments, based on adaptive frequency selection 206, an optimal frequency 212 may be selected. For example, the optimal frequency 212 may be an available transmission frequency associated with the lowest predicted signal loss based on a desired transmission range, e.g., the distance to the Rx asset 104, given current conditions within the ED 112 as best predicted or modelled.

In some embodiments, adaptive frequency selection 206 may further be used by the Tx asset 102 to determine, based on current conditions within the ED 112, an optimal height 214 of the antenna elements 204 of the Tx asset relative to the water surface 114. For example, based on humidity levels within the ED 112, a height of the high humidity layer 112a above the water surface 114 may be predicted. Accordingly, adaptive frequency selection 206 may similarly recommend an optimal height 214 associated with lowest predicted signal loss for a given transmission frequency and a given set of current ED conditions.

Referring also to FIG. 2B, the adaptive frequency selection module 206 (e.g., as executable by Tx/Rx processors 202) is shown.

In embodiments, the adaptive frequency selection may, based on weather data 208 and location/timing data 210, determine an environmental model 216 profiling the ED 112 and conditions therein as best understood or predicted. For example, location and timing data 210 may include the current time of year and/or time of day (210a) corresponding to the transmission of the RF signal 118 as well as geographic location data 210b for the Tx asset 102 and Rx asset 104. Similarly, weather data 208 may preferably include real time climate data 208a (e.g., temperature and humidity) at or near the Tx asset 102 and/or Rx asset 104 or, alternatively, historical humidity and temperature data 208b, or predictive weather forecast data 208c, corresponding to the geographic location data 210b and current time data 210a (e.g., historical data as to ED conditions for the current time of year and/or day, or forecasts of temperature and humidity at the current time data).

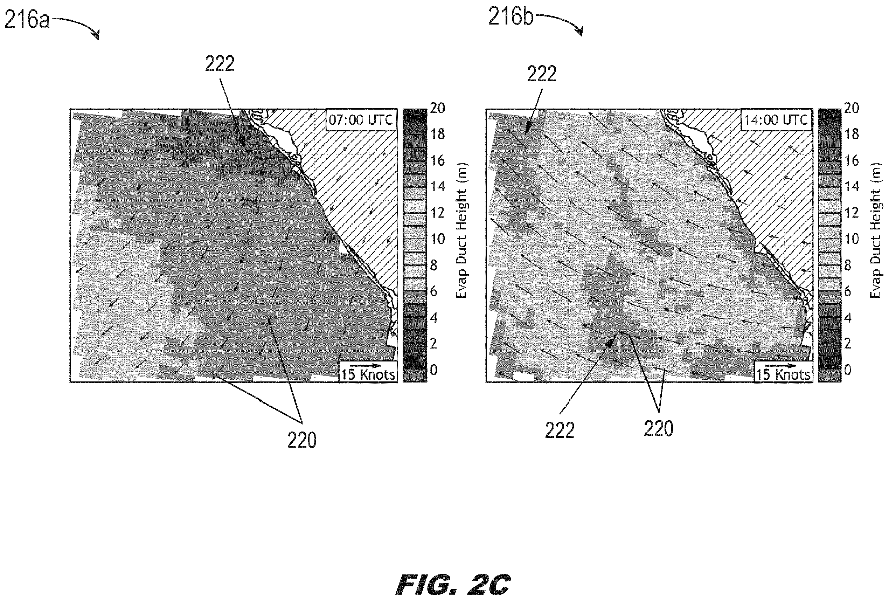

In embodiments, the environmental model 216 may include duct profiles 218, or probability distributions of evaporation duct heights within the ED 112. For example, duct height, or the height of the high humidity layer 112a above the water surface 114, is a primary contributor to the signal propagation properties of the ED 112. As shown by FIG. 2C, the environmental models 216a-216b may forecast and project evaporation duct heights throughout the ED environment 100 at various transmission times throughout the day. For example, the environmental model 216a may project at a first prospective transmission time (e.g., 07:00 UTC), and the environmental model 216b may project at a second prospective transmission time (e.g., 14:00 UTC), likely environmental duct heights, e.g., particularly in the vicinity of the Tx asset 102, the Rx asset 104, and/or a transmission path for the RF signal 118 connecting the two assets. In some embodiments, the environmental model 216 may include additional atmospheric data potentially affecting duct heights within the ED 112, e.g., wind directions and/or windspeeds 220. Further, in some embodiments the environmental model 216 may include additional data with respect to evaporation duct shapes 222 (e.g., of areas associated with a particular evaporation duct height) or total humidity levels throughout the ED environment 100.

Referring back to FIG. 2B, in some embodiments the environmental model 216 may further include wave profiles 224, or likely wave heights along the water surface 114 under the ED 112. Similarly, in some embodiments the environmental model 216 may include tide information 224a. For example, wave and/or tide data may provide predictive indication of potential scattering or diffraction of the RF signal 118 by surface waves, or of additional dynamic properties potentially contributing to signal loss based on the current sea state.

In embodiments, the frequency selection module 206 may generate an RF propagation model 226 for the transmission of the RF signal 118 from the Tx asset 102 to the Rx asset 104 through the ED 112, based on likely ED conditions as modelled by the environmental model 216, transmission frequencies 228 available to the Tx asset 102, and possible ranges 230 of the Rx asset relative to the Tx asset 102 (e.g., the traveling distance of the RF signal 118).

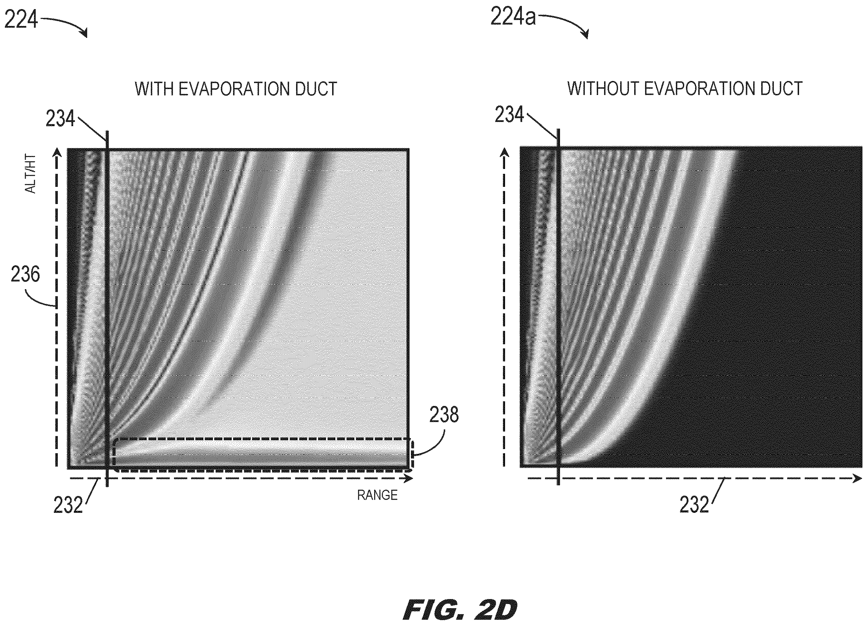

For example, referring also to FIG. 2D, the RF propagation model 226 for each available transmission frequency 228 may map signal loss (e.g., if the RF signal 118 is transmitted at that transmission frequency) according to possible ranges 230 of the Rx asset 104 (x-axis 232), both up to and beyond the line of sight (LOS) horizon 234, and the altitude or height (e.g., y-axis 236) of the antenna elements (204, FIG. 2) relative to the water surface (114, FIG. 1; corresponding to the x-axis, e.g., a region of substantially zero altitude directly adjacent to the water surface). For example, the RF propagation model 226 may incorporate Tropospheric ElectroMagnetic Parabolic Equation Routing (TEMPER) or other like modeling means for predicting signal loss through a particular set of ED conditions. It may be noted that, in comparison to a baseline RF propagation model 226a for the selected transmission frequency 228 and desired range 230 but for overland transmissions through standard atmosphere of relatively uniform humidity (e.g., without the presence of an ED 112), the effect of the ED in "trapping" the transmitted RF signal 118 for long-distance transmission over the LOS horizon 234 and proximate to the water surface 114, as shown by the area 238 of low signal loss (e.g., high sustained transmission power over an extended range) proximate to the x-axis 232 and corresponding to the ED 112.

Referring back to FIG. 2B, in embodiments, based on the RF propagation models 226 for each transmission frequency across a variety of possible ranges 230, signal loss models 240 may be determined indicating the potential signal loss associated with transmission of the RF signal 118 for each available transmission frequency 228. For example, based on determined signal loss models 240 including a full or partial set of the available transmission frequencies 228, an optimal transmission frequency 212 may be selected for transmission of the RF signal 118. In some embodiments, an optimal height 214 of antenna elements (204, FIG. 2) at the Tx asset 102 (and/or the Rx asset 104) may additionally be selected based on the signal loss models 240.

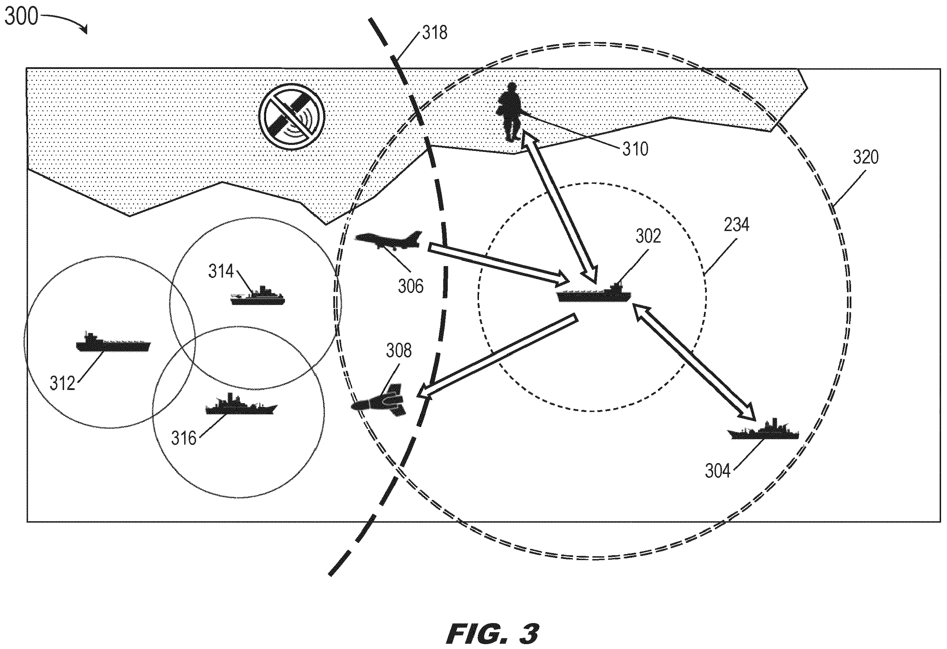

Referring now to FIG. 3, the contested ED environment 300 may be implemented similarly to the contested ED environment 100 of FIG. 1, except that the contested ED environment 300 may include friendly command ship 302, friendly combat ship 304 (e.g., surface ships, submersibles), friendly aircraft 306 (e.g., fixed-wing, rotorcraft, unmanned), friendly sea-skimming weapon 308 (e.g., large unmanned surface vehicles (LUSV)), friendly manpack 310, hostile command ship 312, and hostile combat ships 314, 316.

In embodiments, the contested ED environment 300 may be a coastal environment fully or partially including a denied environment 318 within which SATCOM resources may be degraded or denied. Accordingly, the friendly command ship 302 may utilize evaporation duct communications (EDCOM) for ship-to-ship communications with the friendly combat ship 304 and ship-to-shore communications with the onshore friendly manpack 310, both distant enough to be beyond the LOS horizon 234 of the friendly command ship, in fulfillment of LOCE and EABO concepts as well as next-generation and evolving strategic concepts and paradigms. Further, the use of highly directional communications may provide low probability of detection (LPD) for any EDCOM-based communications between the friendly command ship 302 and its networked assets.

In some embodiments, EDCOM may provide sufficient effective range 320 to allow BLOS communications links to friendly aircraft 306 and friendly sea-skimming weapons 308 operating within the denied environment 318. Further, it may be noted that when selecting an optimal transmission frequency (212, FIGS. 2A-B), the friendly command ship 302 (and, e.g., any such Tx node (102, FIG. 1)) may not always select the transmission frequency associated with maximum effective range 320 of the transmitted RF signal (118, FIG. 1). For example, the friendly command ship 302 may select an EDCOM optimal transmission frequency 212 associated with a shorter effective range so as to provide a stable EDCOM link, e. g., to the friendly aircraft 306 or friendly sea-skimming weapon 308, but not detectable by the hostile combat ships 314, 316 (which may be within the maximum EDCOM transmission range of the friendly command ship).

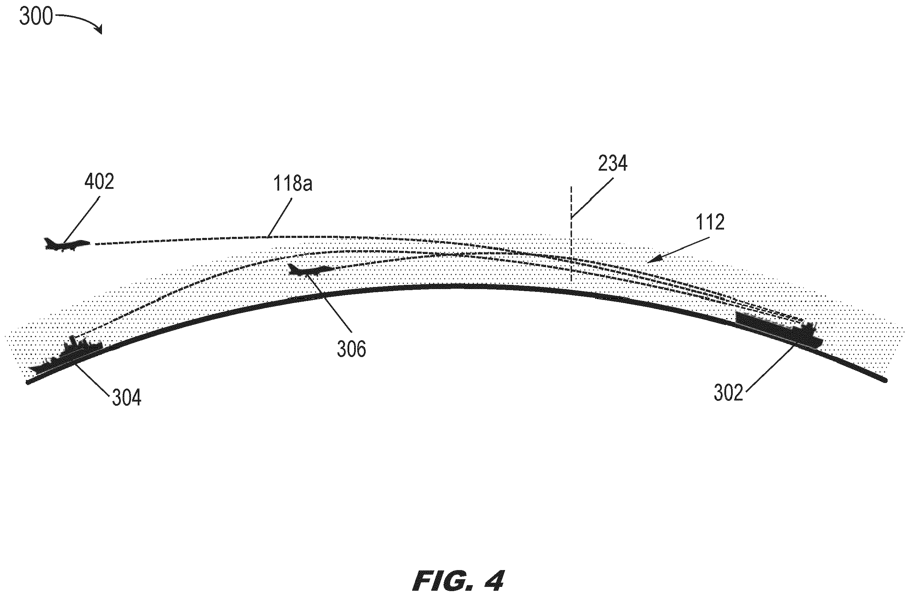

Referring to FIG. 4, the contested ED environment 300 is shown.

In embodiments, the friendly command ship 302 may maintain ship-to-ship communications with the friendly combat ship 304 and the friendly aircraft 306 via EDCOM, as also shown by FIG. 3. For example, the friendly aircraft 306 may be an unmanned aerial vehicle (UAV) or manned aircraft configured for operations (e.g., hovering and/or level flight) within the ED 112, e.g., at a sufficiently low altitude above the water surface 114 as to enable transmission and reception via EDCOM.

In some embodiments, an additional friendly aircraft 402 operating in the vicinity of, but not inside, the ED 112, may provide one-way battlespace feeds into SATCOM denied or degraded environments (318, FIG. 3) via EDCOM. For example, the additional friendly aircraft 402 may transmit an RF signal 118a toward its LOS horizon 234, such that conditions within the ED 112 may allow for propagation of the transmitted RF signal toward the friendly command ship 302 operating beyond the LOS horizon of the additional friendly aircraft.

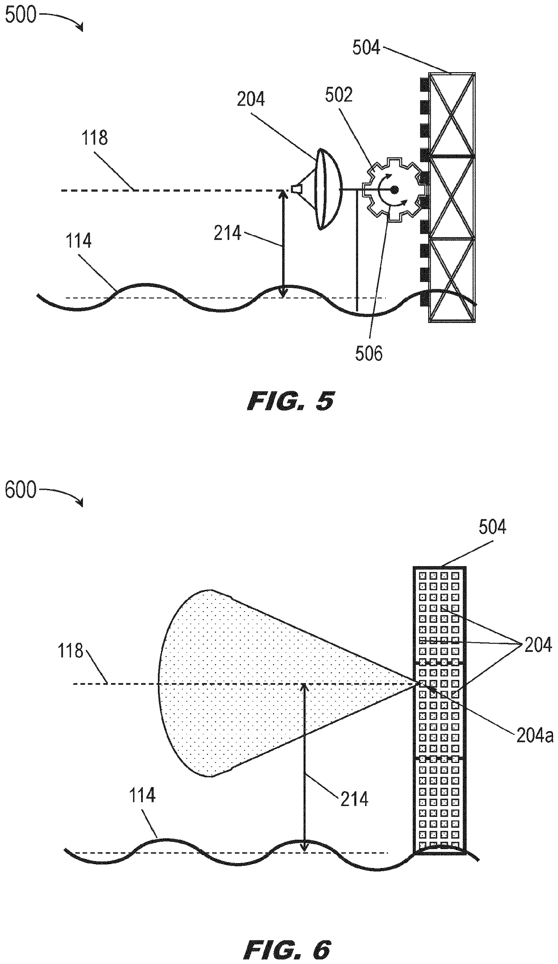

Referring now to FIGS. 5 and 6, the Tx assets 500, 600 may be implemented and may function similarly to the Tx asset 102 of FIG. 1, except that the Tx assets 500, 600 may (e.g., via adaptive frequency selection (206, FIGS. 2A and 2B)) select an optimal height 214 (e.g., optimal transmission height, optimal reception height) of the antenna elements 204 relative to the water surface 114, based on the ED propagation model (226, FIG. 2B) and/or according to mission priorities (e.g., maximum transmission range, LPD).

It may be noted that the friendly aircraft (306, 402; FIGS. 3 and 4) may incorporate an EDCOM-capable communications system (200, FIG. 2), such that the communications system may determine an optimal EDCOM transmission or reception height 214 of the friendly aircraft relative to the water surface 114, and such that the friendly aircraft may achieve this optimal height by climbing or descending to the optimal height within the ED (112, FIG. 4).

Referring in particular to FIG. 5, in embodiments the Tx asset 500 may include antenna elements 204 articulably attached (502) to a platform 504 (e.g., motorized poles or structures). For example, the platform 504 may be fixed to the shore or ocean floor such that the platform remains at a fixed height relative to the water surface 114 (e.g., subject to tidal and/or wave activity). Alternatively, the platform 504 may float on the water surface 114, rising and falling in relative height according to tidal or wave activity. In embodiments, when an optimal height 214 is selected by the Tx asset 500, the antenna elements 204 may be articulated 506 (e.g., raised or lowered in height) relative to the platform 504 in order to achieve the optimal height determined by current ED conditions.

Referring in particular to FIG. 6, in embodiments the Tx asset 600 may include a long electronically scanned array (ESA) comprising multiple antenna elements 204 at predetermined heights relative to the platform 504. For example, the Tx asset 600 may select an optimal transmission height 214 (e.g., for transmission of the RF signal 118) and achieve this optimal height via electronic activation of the antenna element 204a corresponding to the optimal height relative to the water surface 114 for transmission of the RF signal.

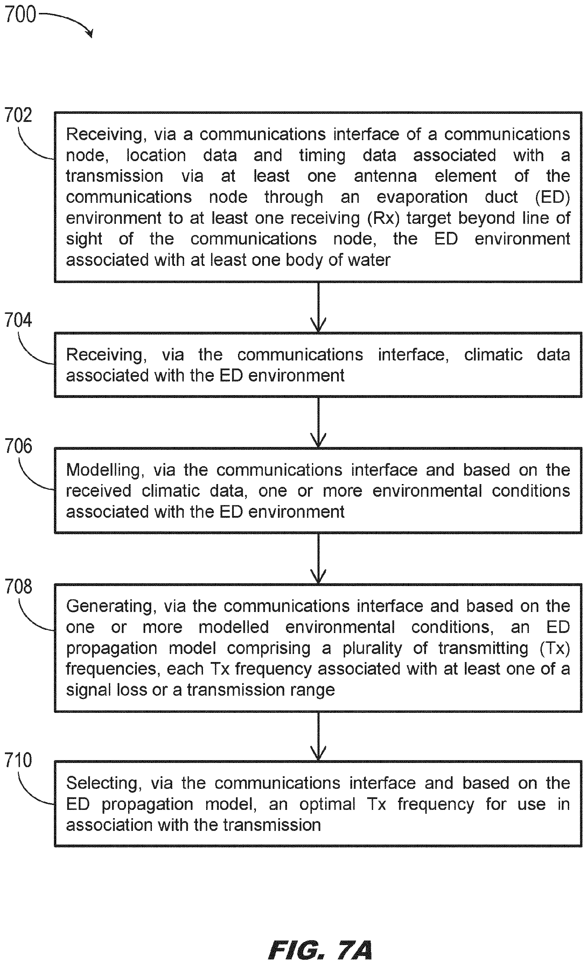

Referring now to FIG. 7A, the method 700 may be implemented by the Tx assets 102, 500, 600, the Rx asset 104, and/or the communications system 200 and may include the following steps.

At a step 702, the Tx asset receives location and timing data associated with transmission of an RF signal to an Rx asset through an evaporation duct (ED) environment, e.g., a coastal, littoral, or marine environment associated with an ocean or branch thereof capable of supporting an evaporation duct above its surface. For example, the Tx asset may receive, in addition to the current time of day/time of year, geographical locations of the Tx asset, the Rx asset, and/or the ED environment connecting the two assets (e.g., via which the transmitted RF signal will travel).

At a step 704, the Tx asset receives climatic data associated with the ED environment. For example, the Tx asset may preferably receive real time temperature and humidity data for the Tx asset and Rx asset locations (and/or the ED corridor therebetween). Alternatively or additionally, the Tx asset may receive historical temperature/humidity data for the relevant asset locations, or predictive weather data forecasting temperature and humidity conditions at the time of transmission.

At a step 706, the Tx asset generates an environmental model of the ED environment based on the location, timing, and climatic data. For example, the ED environment may model the likely height of the evaporation duct between the Tx and Rx assets. In some embodiments, the environmental model may include information about total humidity, duct shapes, wave heights, tidal activity, and/or wind speed/direction within the ED environment.

At a step 708, the Tx asset generates an RF propagation model based on the environmental model of the ED environment. For example, RF propagation models for each frequency available for transmission of the RF signal may project likely signal loss along the transmission range of the Tx asset based on a transmission of the RF signal at that frequency.

At a step 710, the Tx asset selects an optimal frequency for transmission of the RF signal through the ED environment to the Rx asset. For example, an optimal frequency may be selected based on maximum achievable transmission range, or for low probability of detection (LPD) of the signal by hostile assets. In some embodiments, the process of environmental modelling, RF propagation modelling, and selection of an optimal frequency may repeat at pre-determined time intervals (e.g., based on predictable cycles in ED conditions), in response to a triggering event indicative of a likely change in ED conditions, or continually.

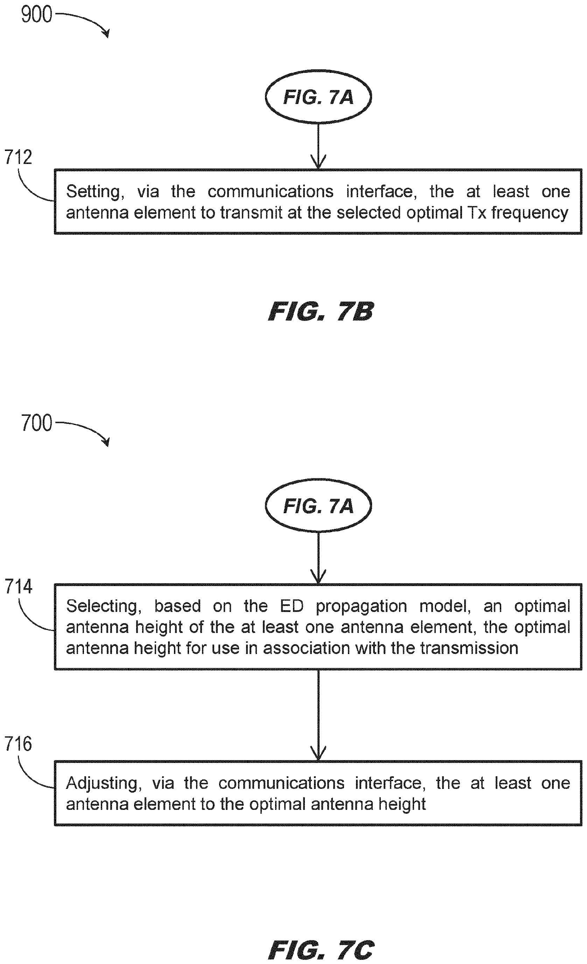

Referring also to FIG. 7B, the method 700 may include an additional step 712. At the step 712, the communications interface of the Tx asset configures the antenna elements of the Tx asset to transmit the RF signal at the selected optimal frequency.

Referring also to FIG. 7C, the method 700 may include additional steps 714 and 716. At the step 714, the Tx asset may select, based on the ED signal propagation model, an optimal height of the Tx asset's antenna elements (relative to the water surface below the ED) for transmission of the RF signal.

At the step 716, the Tx asset communications interface adjusts the antenna elements to the selected optimal height. For example, the antenna elements may be articulated relative to a platform to which they are mounted (e.g., a fixed or floating platform) to achieve the optimal height. In some embodiments, the Tx asset includes an electronically scanned array (ESA) incorporating multiple antenna elements at various predetermined heights (e.g., relative to the platform or to the water surface), and the Tx asset electronically activates the antenna element/s corresponding to the selected optimal height for transmission of the RF signal. In some embodiments, the Tx asset may be a mobile platform (e.g., a manned or unmanned aircraft or sea-skimming weapon) capable of operations within the ED and of maneuvering to the selected optimal height (such that the antenna elements are positioned at the optimal height).

### CONCLUSION

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. A communications node of a multi-node communications network, comprising:
at least one antenna element (204);
and
a communications interface coupled to the at least one antenna element and configured for transmitting and receiving via the at least one antenna element, the communications interface including one or more processors (202) configured to:
receive location data and timing data associated with a transmission through an evaporation duct, ED, environment to at least one receiving, Rx, target beyond line of sight of the communications node, the ED environment associated with at least one body of water (110);
receive climatic data associated with the ED environment;
model one or more environmental conditions associated with the ED environment based on at least the climatic data;
generate an ED propagation model based on the one or more modelled environmental conditions, the ED propagation model comprising a plurality of transmitting, Tx, frequencies, each Tx frequency associated with at least one of a signal loss or a transmission range;
and
select, based on the ED propagation model, an optimal Tx frequency for use in association with the transmission.

2. The communications node of Claim 1, wherein the one or more processors (202) are configured to set the at least one antenna element (204) to transmit at the selected optimal Tx frequency.

3. The communications node of Claim 1 or 2, wherein the one or more ED conditions include one or more of:
an evaporation duct height;
an evaporation duct shape;
or
a humidity level.

4. The communications node of Claim 1, 2 or 3, wherein the climatic data includes one or more of:
real time weather/atmospheric data associated with the ED environment;
predictive weather/atmospheric data associated with the ED environment;
historical weather/atmospheric data associated with the ED environment;
tide data associated with the ED environment; and
wave data associated with the ED environment.

5. The communications node of any preceding Claim, wherein the selected optimal Tx frequency corresponds to a maximum transmission range; and/or wherein the selected optimal Tx frequency corresponds to a low probability of detection, LPD.

6. The communications node of any preceding Claim, wherein the one or more processors (202) are configured to select, based on the ED propagation model, the selected optimal Tx frequency by:
transmitting, to the Rx target and through the ED environment, at least one channel sounding signal at one or more Tx frequencies selected from the plurality of Tx frequencies;
receiving, via the at least one antenna element (204), signal reception data from the Rx target;
and
selecting the optimal Tx frequency based on the received signal reception data.

7. The communications node of any preceding Claim, wherein the optimal Tx frequency is a first optimal Tx frequency, and the one or more processors (202) are configured to select a new optimal Tx frequency in response to a triggering event, the triggering event including at least one of:
a weather change associated with the received climatic data;
a condition change associated with the one or more modelled environmental conditions;
a mission priority change associated with the transmission;
or
signal quality of the transmission meeting a threshold level.

8. The communications node of any preceding Claim, wherein the one or more processors (202) are further configured to select an optimal bandwidth for use in association with the transmission.

9. The communications node of any preceding Claim, wherein the communications node is embodied aboard a mobile platform; and optionally wherein the mobile platform is an unmanned aerial vehicle, UAV.

10. The communications node of any preceding Claim, wherein the communications node is embodied aboard a platform configured to float on the body of water (110).

11. The communications node of any preceding Claim, wherein:
the at least one body of water (110) is associated with a water surface level;
the at least one antenna element (204) is associated with an antenna height relative to the water surface level;
and
the one or more processors (202) are configured to select an optimal antenna height for use in association with the transmission based on the ED propagation model.

12. The communications node of Claim 11, wherein:
the communications node is embodied in a platform, the at least one antenna element (204) adjustably coupled to the platform;
and
wherein the one or more processors (202) are configured to direct the communications node to adjust the at least one antenna element to the optimal antenna height by articulating the at least one antenna element relative to the platform; and/or:
wherein the at least one antenna element includes at least one antenna array comprising a plurality of antenna elements, each antenna element corresponding to an antenna height relative to the water surface level;
and
wherein the one or more processors are further configured to transmit the transmission via the at least one antenna element corresponding to the selected optimal antenna height.

13. The communications node of Claim 11, wherein:
the communications node is embodied aboard a mobile platform, the mobile platform associated with a platform altitude relative to the water surface level;
and
the one or more processors (202) are further configured to direct the mobile platform to adjust the platform altitude based on the selected optimal antenna height.

14. A method for adaptive communication through an evaporation duct, ED, the method comprising:
receiving, via a communications interface of a communications node, location data and timing data associated with a transmission via at least one antenna element of the communications node through an evaporation duct, ED, environment to at least one receiving, Rx, target beyond line of sight of the communications node, the ED environment associated with at least one body of water;
receiving, via the communications interface, climatic data associated with the ED environment;
modelling, via the communications interface and based on the received climatic data, one or more environmental conditions associated with the ED environment;
generating, via the communications interface and based on the one or more modelled environmental conditions, an ED propagation model comprising a plurality of transmitting, Tx, frequencies, each Tx frequency associated with at least one of a signal loss or a transmission range;
and
selecting, via the communications interface and based on the ED propagation model, an optimal Tx frequency for use in association with the transmission.

15. The method of Claim 14, wherein generating, via the communications interface and based on the one or more modelled environmental conditions, an ED propagation model comprising a plurality of transmitting, Tx, frequencies includes:
transmitting, to the Rx target and through the ED environment, at least one channel sounding signal at one or more Tx frequencies selected from the plurality of Tx frequencies;
and
receiving, via the at least one antenna element, signal reception data from the Rx target;
and
wherein selecting, via the communications interface and based on the ED propagation model, an optimal Tx frequency includes:
selecting the optimal Tx frequency based on the received signal reception data; and/or:
wherein the at least one body of water is associated with a water surface level and the at least one antenna element is associated with an antenna height relative to the water surface level, the method further comprising:
selecting, based on the ED propagation model, an optimal antenna height of the at least one antenna element, the optimal antenna height for use in association with the transmission.
